# EUROPÄISCHE PATENTSCHRIFT

(11) **EP 1 449 008 B1**
(45) Veröffentlichungstag und Bekanntmachung des Hinweises auf die Patenterteilung: **09.04.2008**
(21) Anmeldenummer: 02796504.5
(22) Anmeldetag: 20.11.2002
(51) Int. Cl.: G01S 13/34

(54) **FMCW-RADAR MIT BEGRENZUNG DER SENDEZEIT ZUR VERMEIDUNG VON ALIASING-EFFEKTEN**
FMCW RADAR WITH RESTRICTED EMISSION TIME TO AVOID ALIASING EFFECTS
RADAR A ONDE CONTINUE A MODULATION DE FREQUENCE (FMCW), AVEC LIMITATION DU TEMPS D'EMISSION POUR EVITER LES EFFETS DE REPLIEMENT DE SPECTRE

(30) Priorität: 28.11.2001 DE 10158269
(43) Veröffentlichungstag der Anmeldung: 25.08.2004
(73) Patentinhaber: VDO Automotive AG, 93055 Regensburg (DE)
(72) Erfinder: KUNERT, Martin, 93073 Neutraubling (DE)
(86) Internationale Anmeldenummer: PCT/DE2002/004274
(87) Internationale Veröffentlichungsnummer: WO 2003/048801

(56) Entgegenhaltungen:
- EP-A- 0 758 093
- DE-A- 19 803 660
- US-A- 5 361 072

## Beschreibung

Die Erfindung betrifft ein Radarsystem mit einer Auswerteeinrichtung, die auf der Grundlage einer Spektralanalyse eines aus einem Sendesignal und einem Empfangssignal gebildeten Messsignals die Geschwindigkeit und/oder die Entfernung von zumindest einem zu ortenden Objekt bestimmt.

Die Radartechnik ist unter anderem für den Einsatz im Automobil oder in der Industrie zur Ortung von Objekten besonders geeignet, wobei die Entfernung und/oder die Geschwindigkeit und/oder die Beschaffenheit und/oder die Anwesenheit von einem oder mehreren Objekten erfasst werden kann. Die Funktionalität, die Messgenauigkeit und die Kosten von Radarsystemen hängen wesentlich vom angewandten Modulationsverfahren und der zugehörigen Radar-Signalverarbeitung ab, wobei insbesondere das Pulsmodulationsverfahren und das Frequenzmodulationsverfahren weit verbreitet sind.

Beim Pulsmodulations- beziehungsweise Pulslaufzeitverfahren wird ein kurzer Radarpuls in Richtung Messobjekt ausgesendet und nach einer bestimmten Laufzeit als reflektierter Puls wieder empfangen. Die Laufzeit des Radarpuls ist direkt proportional zum Abstand zum Messobjekt. Um die durch die Ambiguity-Funktion bedingten Mehrdeutigkeiten beim Pulslaufzeitverfahren zu eliminieren, ist es bereits bekannt, die Messwiederholfrequenz so groß einzustellen, dass reflektierte Signale nur während des aktuellen Messzyklus empfangen werden, wobei alle vom vorherigen Messzyklus stammenden Signale hinreichend abgeschwächt sind. Diese Abschwächung erfolgt prinzipbedingt durch die laufzeitabhängige Entfernungsdämpfung, die mit l/Entfernung² abnimmt. Bei einer Messzyklusfrequenz von beispielsweise 10 kHz ergibt sich eine Messintervallzeit von 100 µs. Damit ein Pulssignal vom vorherigen Messzyklus im darauffolgenden Messzyklus erfasst werden kann, muss das Signal eine zusätzliche Laufzeit von 100 µs zurücklegen, was eine Entfernung von zirka 30 km entspricht. Die Empfangsamplitude von derartigen "Langläufern" unterscheidet sich von den Reflexionsamplituden von Zielen im Meterbereich um mehrere Größenordnungen und ist praktisch nicht mehr detektierbar.

Beim insbesondere zur Abstandsmessung eingesetzten FMCW-Radarprinzip (FMCW = Frequency Modulated Continous Wave / frequenzmodulierte kontinuierliche Welle) wird ein frequenzmoduliertes Radarsignal ausgesendet, das phasen- beziehungsweise frequenzverschoben empfangen wird. Die gemessene Phasen- beziehungsweise Frequenzdifferenz, die typischerweise im Kilohertzbereich liegt, ist proportional zum Objektabstand. Beim FMCW-Verfahren erzeugen weiter entfernt liegende Reflexionsobjekte prinzipbedingt auch höhere Frequenzen. Um die durch die Ambiguity-Funktion bedingten Mehrdeutigkeiten zu eliminieren und den Messbereich eindeutig bis zu einem bestimmten Abstand zu definieren, ist es bekannt, alle Frequenzen über dem des bestimmten Abstandes entsprechenden Frequenzwert abzuschneiden, was möglichst scharfflankig erfolgt. Zu diesem Zweck werden insbesondere Filterstrukturen höherer Ordnung eingesetzt, beispielsweise ein Bessel-Tiefpass 8-ter Ordnung. Mit diesem sogenannten "Anti-Aliasing-Filtern" werden Ziele in größerer Entfernung entsprechend der Filtercharakteristik gedämpft und können daher nicht mehr zu Störungen durch Rückfaltungseffekte im Spektrum führen. Um eine digitale Weiterverarbeitung der kontinuierlichen Signale ohne Informationsverlust zu ermöglichen, ist es weiterhin erforderlich, die Abtastfrequenz entsprechend dem Shannon-Theorem als das doppelte der Filtereckfrequenz zu wählen. Zur digitalen Weiterverarbeitung werden in der Regel Mikrocontroller und/oder Signalprozessoren eingesetzt.

Das Dokument EP 0 758 093 A2 beschreibt ein FMCW Radargerät. Die Modulationsdauer, d.h. die Zeitdauer einer an- oder ab steigenden Flanke des Sendesignals, wird hierbei an die Geschwindigkeit des Fahrzeugs angepasst.

Das Dokument US 5,361,072 beschreibt das Problem des Aliasing bei FMCW Radarsystemen. Es wird davon abgeraten, zur Vermeidung des Aliasing die Länge des Pulses zu verkürzen, denn dieses würde einerseits den duty factor erniedrigen, und andererseits blind zones erzeugen. Unter blind zones werden hierbei Gebiete verstanden, in welchen Objekte für das Radarsystem nicht sichtbar sind.

Der Erfindung liegt die Aufgabe zugrunde, die gattungsgemäßen Radarsysteme derart weiterzubilden, dass der erforderliche Hard- und/oder Softwareaufwand verringert wird.

Diese Aufgabe wird durch die Merkmale des Anspruchs 1 gelöst.

Vorteilhafte Ausgestaltungen und Weiterbildungen der Erfindung ergeben sich aus den abhängigen Ansprüchen.

Das erfindungsgemäße Radarsystem baut auf dem gattungsgemäßen Stand der Technik dadurch auf, dass Mittel vorgesehen sind, die zur Vermeidung von Aliasing-Effekten die Sendezeit des Sendesignals begrenzen. Durch diese Lösung kann das bei den bekannten Radarsystemen vorgesehene Anti-Aliasing-Filter entfallen, was die Kosten senkt. Ein weiterer Vorteil der erfindungsgemäßen Lösung besteht darin, dass die Abtastfrequenz, den vorherrschenden Anforderungen entsprechend, in weiten Bereichen variiert werden kann, da eine Kopplung über das Abtasttheorem vom Shannon wegen des Wegfalls des im Allgemeinen nicht verstellbaren Anti-Aliasing-Filters nicht mehr besteht. Die Variation der Abtastfrequenz kann beispielsweise in vorteilhafter Weise zur Auflösungssteigerung bei konstantem Frequenzhub und/oder bei konstanter Messzeit genutzt werden.

Bei bevorzugten Ausführungsformen des erfindungsgemäßen Radarsystems ist weiterhin vorgesehen, dass durch die Begrenzung der Sendezeit des Sendesignals ein pulsförmiges Sendesignal erzeugt wird, dessen Sendepulslänge den maximalen Messbereich festlegt. Die Sendezeitbegrenzung beziehungsweise die Einstellung der Sendepulslänge kann beispielsweise durch eine Leistungstaktung des Sendesignals während der Modulation erfolgen, wie sie in DE 198 03 660.4 vorgeschlagen ist, deren Offenbarungsgehalt durch diese Bezugnahme hier aufgenommen wird. Gemäß der vorliegenden Erfindung - und abweichend von der Lehre der erwähnten DE 198 03 660.4 - wird die Sendepulslänge jedoch vorzugsweise derart eingestellt, dass über die Signallaufzeitbedingung ein vorgegebener maximaler Messbereich Rₘₐₓ eingehalten wird. Dabei gilt Rₘₐₓ = 2 x Sendepulslänge/Lichtgeschwindigkeit. Der Messbereich kann somit applikationsabhängig von unter einem Meter bis zu mehreren Metern beziehungsweise 100-Metern variiert werden. Ein entscheidender Unterschied zu dem eingangs erwähnten bekannten Pulslaufzeitverfahren besteht darin, dass die Signalauswertung erfindungsgemäß durch Spektralanalyse und nicht durch eine Laufzeitmessung des Radarpulses selbst erfolgt.

Insbesondere um die vorstehend erwähnte applikationsabhängige Variation des Messbereiches zu ermöglichen, ist vorzugsweise weiterhin vorgesehen, dass die Sendepulslänge des Sendesignals variabel ist.

Zusätzlich oder alternativ kann in vorteilhafter Weise vorgesehen sein, dass zur Bestimmung des maximalen Messbereiches zwischen zumindest zwei Sendepulslängen gewechselt wird. Wenn beispielsweise beim Vorhandensein eines (bewegten) Zielobjektes abwechselnd zwischen mindestens zwei unterschiedlichen Sendepulslängen hin und her geschaltet wird, kann der Einfluss auf die Empfangssignalstärke ausgewertet werden, um den maximalen Messbereich exakt zu bestimmen.

Wie erwähnt wird für alle Ausführungsformen des erfindungsgemäßen Radarsystems bevorzugt, dass das Messsignal ein digitales Messsignal ist.

In diesem Zusammenhang ist vorzugsweise weiterhin vorgesehen, dass das digitale Messsignal aus einem Mischerausgangssignal eines Mischers gewonnen wird. Wie für die gesamte Erfindung ist es dabei unerheblich, ob die Sende- und Empfangseinheit des erfindungsgemäßen Radarsystems monostatisch oder bistatisch betrieben wird.

Weiterhin wird bevorzugt, dass das digitale Messsignal von einem Analog-Digitalwandler geliefert wird, dessen Abtastfrequenz variabel ist. Die Variation der Abtastfrequenz kann dabei, wie erwähnt, insbesondere zur Auflösungssteigerung bei konstantem Frequenzhub und/oder bei konstanter Messzeit genutzt werden.

Obwohl dies nicht zwingend erforderlich ist, ist bei besonders bevorzugten Ausführungsformen des erfindungsgemäßen Radarsystems vorgesehen, dass das Mischerausgangssignal von einer Ablauf- und Halteschaltung beziehungsweise einer Sampleand Holdschaltung zwischengespeichert wird, bevor es dem Analog-Digitalwandler zugeführt wird. Dabei ist die Digitalisierungsrate des Analog-Digitalwandlers vorzugsweise kleiner oder gleich als die Abtastrate der Sample- and Holdschaltung.

In diesem Zusammenhang ist vorzugsweise weiterhin vorgesehen, dass die Samplezeit der Sample- and Holdschaltung unabhängig von der Sendepulslänge einstellbar ist.

Insbesondere in diesem Zusammenhang kann weiterhin vorgesehen sein, dass die Samplezeit der Sample- and Holdschaltung zur Sendepulslänge verzögert ist.

Zusätzlich oder alternativ kann vorgesehen sein, dass die Samplezeit der Sample- and Holdschaltung kürzer oder gleich der Sendepulslänge ist. Die zeitliche Verzögerung der Samplezeit der Sample- and Holdschaltung (und gegebenenfalls auch der Samplezeit des Analog-Digitalwandlers) ermöglichen eine bessere Signalauswertung, insbesondere aufgrund einer deutlichen Reduzierung von Überschneidungs- und Glitcheffekten.

Bei bevorzugten Ausführungsformen des erfindungsgemäßen Radarsystems ist weiterhin vorgesehen, dass der Eingang der Sample- and Holdschaltung außerhalb der Samplezeit auf einen niederohmigen Arbeitspunkt gezogen wird. Auf diese Weise können Signalreflexionen im Hochfrequenzbereich wirksam unterdrückt werden, wobei der niederohmige definierte Arbeitspunkt beispielsweise durch virtuelle Masse gebildet sein kann.

Zumindest für bestimmte Betriebsweisen des erfindungsgemäßen Radarsystems ist vorgesehen, dass das Sendesignal ein frequenzmoduliertes Sendesignal ist.

Dabei kann weiterhin vorgesehen sein, dass die Frequenz des frequenzmodulierten Sendesignals zumindest zeitweise variiert wird, insbesondere zur Bestimmung der Entfernung von einem zu ortenden Objekt. Diese Betriebsweise entspricht mit Ausnahme der Sendezeitbegrenzung dem an sich bekannten FMCW-Verfahren.

In diesem Zusammenhang kann vorgesehen sein, dass die Frequenz des frequenzmodulierten Sendesignals kontinuierlich variiert wird.

Zumindest für bestimmte Betriebsweisen des erfindungsgemäßen Radarsystems kann alternativ vorgesehen sein, dass die Frequenz des frequenzmodulierten Sendesignals in diskreten Frequenzstufen variiert wird. Dabei liegt die jeweilige Frequenz vorzugsweise sowohl vor als auch nach dem jeweiligen Sendepuls eine Mindestzeit stabil an. Die diskreten Frequenzstufen können beispielsweise mittels einer einfachen Kombination von verschiedenen Widerstandswerten mit einer Kapazität erzeugt werden, wobei die Widerstände entweder nach Masse oder hochohmig geschaltet werden, vorzugsweise von einem Mikrocontroller.

Eine besonders bevorzugte Weiterbildung des erfindungsgemäßen Radarsystems sieht vor, dass die diskreten Frequenzstufen in beliebiger Reihenfolge anfahrbar sind. Dabei können beispielsweise die nach der Sample- and Holdschaltung des Analog-Digitalwandlers anfallenden Werte numerisch nach ihrem aktuellen Frequenzwert sortiert beziehungsweise entflechtet werden. Eine zeitliche Verschachtelung von jeweils einem Messpunkt einer aufwärts- beziehungsweise abwärtslaufenden Frequenzrampe stellt dabei eine besonders wirkungsvolle und effiziente Ausführungsform dar, da beide Frequenzrampen praktisch gleichzeitig aufgenommen werden. Allgemein kann das Anfahren der diskreten Frequenzstufen in einer beliebigen, das heißt insbesondere nicht-sortierten, Reihenfolge wirksam dazu beitragen, Fadingeffekte zu vermeiden.

Zumindest für bestimmte Betriebsweisen des erfindungsgemäßen Radarsystems ist vorgesehen, dass die Frequenz des frequenzmodulierten Sendesignals zumindest zeitweise konstant gehalten wird, insbesondere zur Bestimmung der Geschwindigkeit eines zu ortenden Objektes. Dieses Verfahren ist an das an sich bekannte Doppler-Radar-Verfahren angelehnt. Wenn die Sendepulsdauer kontinuierlich oder diskret in einem vorgegebenen Bereich variiert wird, ist es möglich, die Dopplergeschwindigkeit entfernungsabhängig zu messen.

Da die Radartechnik im Kraftfahrzeugsektor zunehmend eingesetzt wird, ist es in vielen Fällen vorteilhaft, wenn vorgesehen ist, dass die einstellbare Sendezeit an im Kraftfahrzeugbereich erforderliche Messbereiche angepasst ist und insbesondere zwischen 20 ns und 200 ns liegt. Dabei entspricht eine Sendezeit von 20 ns ungefähr einem Messbereich von 3 m, während eine Sendezeit von 200 ns ungefähr einem Messbereich 30 m entspricht. Der angegebene Bereich kann gegebenenfalls sowohl nach oben als auch nach unten erweitert werden, so dass sich Messbereiche von weniger als einem Meter bis hin zu einigen hundert Metern ergeben. In jedem Fall wird bevorzugt, dass die Sendezeit beziehungsweise die Sendepulslänge und damit der jeweilige Entfernungsmessbereich applikationsspezifisch umgeschaltet werden kann. Im Kraftfahrzeugbereich ergeben sich für das erfindungsgemäße Radarsystem beispielsweise Einsatzmöglichkeiten bei Einparkhilfen, der Precrashdetektion, der Überwachung des toten Winkels und so weiter.

Der Erfindung liegt die Erkenntnis zugrunde, dass sich sowohl die bekannten FMCW-Systeme als auch die bekannten CW-Systeme ohne Leistungsverlust kostengünstiger herstellen lassen, indem auf ein Anti-Aliasing-Filter verzichtet und stattdessen eine Sendezeitbegrenzung eingesetzt wird, über die der Messbereich geeignet festgelegt werden kann.

Die Erfindung wird nun unter Bezugnahme auf die beigefügten Zeichnungen anhand bevorzugter Ausführungsformen beispielhaft erläutert.

Es zeigen:
- Figur 1: ein Blockschaltbild einer Ausführungsform des erfindungsgemäßen Radarsystems;
- Figur 2a: einen möglichen Verlauf einer kontinuierlichen Ansteuerung in Form eines Rampensignals für den spannungsgesteuerten Oszillator;
- Figur 2b: einen möglichen Verlauf einer diskreten Ansteuerung in Form eines Rampensignals für den spannungsgesteuerten Oszillator;
- Figur 3a: einen möglichen Verlauf einer kontinuierlichen Ansteuerung in Form eines Rampensignals für den spannungsgesteuerten Oszillator, mit zeitlicher Verschachtelung von jeweils einem Messpunkt der aufwärts- beziehungsweise abwärtslaufenden Frequenzrampe;
- Figur 3b: einen möglichen Verlauf einer diskreten Ansteuerung in Form eines Rampensignals für den spannungsgesteuerten Oszillator, mit zeitlicher Verschachtelung von jeweils einem Messpunkt der aufwärts- beziehungsweise abwärtslaufenden Frequenzrampe;
- Figur 4: einen möglichen Zusammenhang des Ansteuersignals für den spannungsgesteuerten Oszillator, des Leistungstaktes im Sendezweig, des Abtastsignals der Sample- and Holdschaltung im Hochfrequenzzweig und des Triggersignals für den Analog-Digitalwandler;
- Figur 5: eine einfache Ausführungsform einer Ansteuerschaltung für die Sample- and Holdschaltung in Form einer RC-Variante;
- Figur 6: eine einfache Ausführungsform einer Ansteuerschaltung für die Sample- and Holdschaltung in Form einer CR-Variante;
- Figur 7: einen möglichen Zusammenhang von einer in Abhängigkeit von mehreren Steuersignalen erzeugten Pulsdauervariation;
- Figur 8a: den Einfluss der Sampletorzeit auf die Signalamplitude für zwei Ziele mit zirka 8,4 m Abstand bei einer Entfernung des näher gelegenen Ziels von zirka 2 m;
- Figur 8b: den Einfluss der Sampletorzeit auf die Signalamplitude für zwei Ziele mit zirka 8,4 m Abstand bei einer Entfernung des näher gelegenen Ziels von zirka 4,5 m;
- Figur 8c: den Einfluss der Sampletorzeit auf die Signalamplitude für zwei Ziele mit zirka 8,4 m Abstand bei einer Entfernung des näher gelegenen Ziels von zirka 4 m;
- Figur 8d: den Einfluss der Sampletorzeit auf die Signalamplitude für zwei Ziele mit zirka 8,4 m Abstand bei einer Entfernung des näher gelegenen Ziels von zirka 6 m; und
- Figur 9: den Einfluss der Sampletorzeit auf die Signalamplitude für ein Ziel mit kontinuierlich variierter Entfernung.

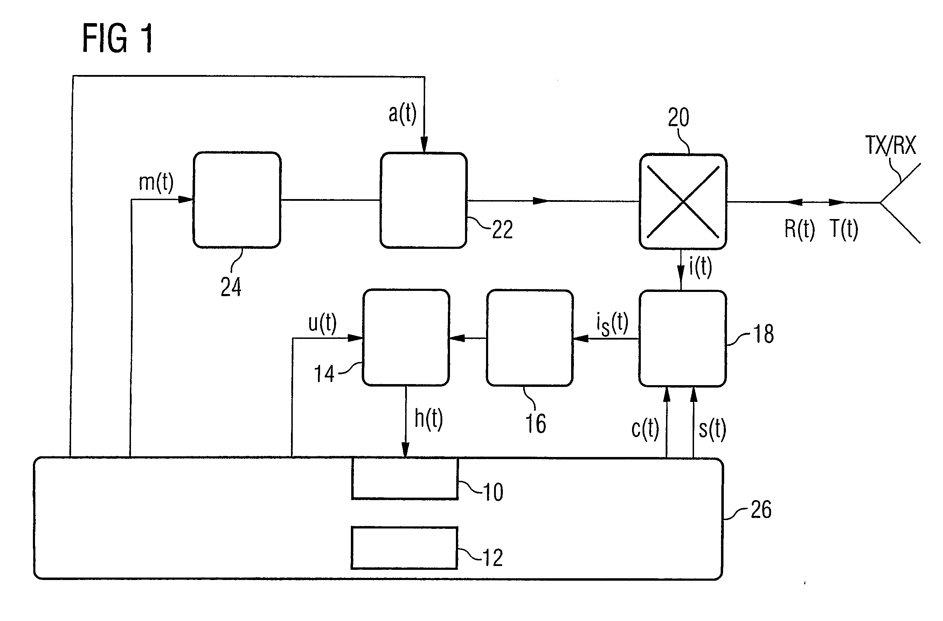

Figur 1 zeigt ein Blockschaltbild einer Ausführungsform des erfindungsgemäßen Radarsystems. Bei dem dargestellten System handelt es sich um ein monostatisch betriebenes System mit Zweikreissampling. Ein insgesamt mit 26 bezeichneter Mikrocontroller bildet sowohl die Auswerteeinrichtung 10 als auch die Mittel 12 zur Begrenzung der Sendezeit τ_{a_on}. Darüber hinaus übernimmt der Mikrocontroller 26 auch alle weiteren Steuerungs- beziehungsweise Regelungsfunktionen. Unter anderem erzeugt der Mikrocontroller 26 ein Ansteuersignal m(t), das einem spannungsgesteuerten Oszillator 24 zugeführt wird, um ein frequenzmoduliertes Sendesignal T(t) zu erzeugen. Der Ausgang des spannungsgesteuerten Oszillators 24 ist mit dem Eingang eines Schalters 22 verbunden, der das frequenzmodulierte Sendesignal T(t) zu seinem Ausgang durchschaltet, wenn ein ebenfalls von dem Mikrocontroller 26 erzeugter Leistungstakt a(t) logisch eins ist. Die Zeitdauer, die der Leistungstakt a(t) logisch eins ist, legt somit die Sendepulslänge τ_{a_on} fest. Das von dem Schalter 22 durchgeschaltete frequenzmodulierte Sendesignal T(t) wird einem Mischer 20 zugeführt und von dort zur Sende- und Empfangsantenne TX/RX weitergeleitet. Ein von einem oder mehreren zu ortenden Objekten reflektiertes Empfangssignal R(t) wird in an sich bekannter Weise ebenfalls dem Mischer 20 zugeführt. Der Mischer 20 liefert ein Mischerausgangssignal i(t), das einer Sample- and Holdschaltung 18 zugeführt wird, die somit dem Hochfrequenzkreis zugeordnet ist. Der Sample- and Holdschaltung 18 werden weiterhin mehrere Steuersignale zugeführt, von denen ein Ansteuersignal c(t) sowie ein Samplesignal s(t) dargestellt sind. Das von der Sample- and Holdschaltung 18 gesamplete Mischerausgangssignal iₛ(t) wird einem Verstärker 16 zugeführt, der beispielsweise einen an den jeweiligen Messbereich angepassten Verstärkungsfaktor aufweisen kann. Der Ausgang des Verstärkers 16 steht mit einem Analog-Digitalwandler 14 in Verbindung, der ein digitales Messsignal h(t) liefert, wenn ihm ein Triggersignal u(t) zugeführt wird.

Wenn die Frequenz des frequenzmodulierten Ausgangssignals T(t) variiert wird, enthält das Spektrum des Mischerausgangssignals i(t) beispielsweise Informationen über die Entfernung eines oder mehrerer Zielobjekte. Wenn die Frequenz des frequenzmodulierten Sendesignals T(t) konstant gehalten wird, enthält das Spektrum des Mischerausgangssignals i(t) insbesondere Informationen über die Geschwindigkeit eines geordneten Objekts, entsprechend dem an sich bekannten Doppler-Radar-Verfahren. Obwohl bei der Ausführungsform gemäß Figur 1 aufgrund der Sample- and Holdschaltung 18 und der weiteren dem Analog-Digitalwandler 14 zugeordneten Sample- and Holdschaltung ein Zweikreissampling vorgesehen ist, kann der Grundgedanke der vorliegenden Erfindung auch auf Ausführungsformen angewendet werden, bei denen lediglich ein Analog-Digitalwandler mit einer Sample- and Holdschaltung vorgesehen ist. Erfindungsgemäß erfolgt die Bandbegrenzung des Mischerausgangssignals i(t) einzig und allein durch eine direkte Sendezeitbegrenzung während der Frequenzmodulation des Sendesignals T(t), so dass kein üblicherweise verwendetes Anti-Aliasing-Filter erforderlich ist.

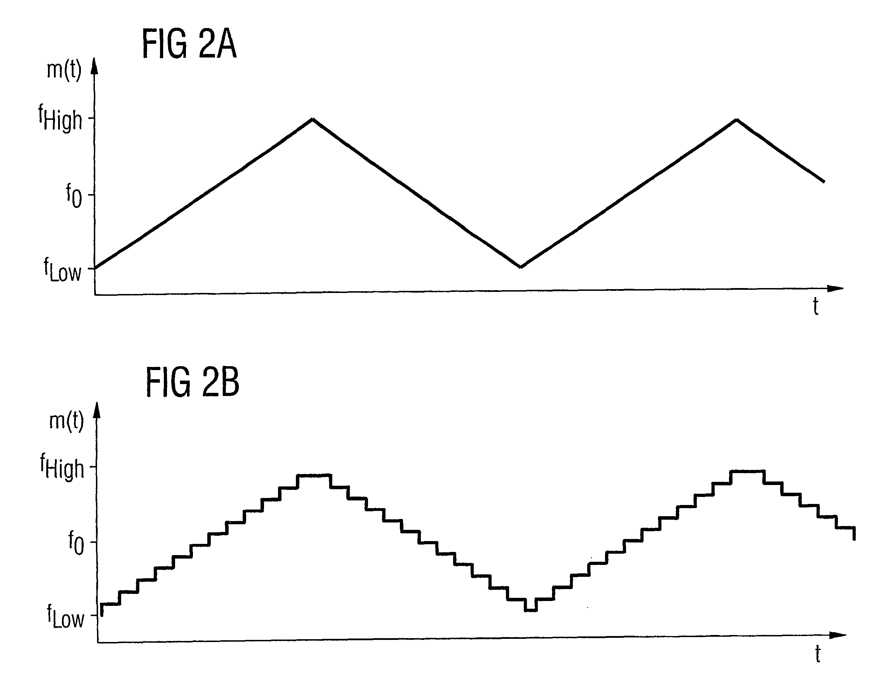

Figur 2a zeigt einen möglichen Verlauf einer kontinuierlichen Ansteuerung in Form eines Rampensignals für den spannungsgesteuerten Oszillator und Figur 2b zeigt einen möglichen Verlauf einer diskreten Ansteuerung in Form eines Rampensignals für den spannungsgesteuerten Oszillator. Dabei sind die in Figur 2b dargestellten diskreten Frequenzstufen in der Praxis sehr viel einfacher zu erzeugen als die in Figur 2a dargestellte kontinuierliche Frequenzrampe.

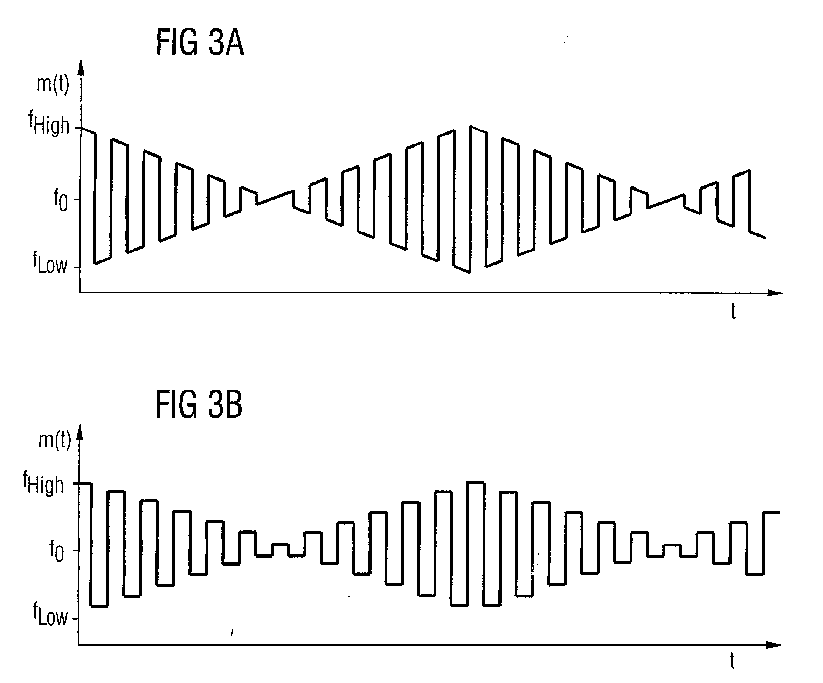

Figur 3a zeigt einen möglichen Verlauf einer kontinuierlichen Ansteuerung in Form eines Rampensignals für den spannungsgesteuerten Oszillator, mit zeitlicher Verschachtelung von jeweils einem Messpunkt der aufwärts- beziehungsweise abwärtslaufenden Frequenzrampe und Figur 3b zeigt einen möglichen Verlauf einer diskreten Ansteuerung in Form eines Rampensignals für den spannungsgesteuerten Oszillator, mit zeitlicher Verschachtelung von jeweils einem Messpunkt der aufwärts- beziehungsweise abwärtslaufenden Frequenzrampe. Obwohl prinzipiell bevorzugt wird, dass alle (diskreten) Frequenzstufen in jeder beliebigen Reihenfolge zeitlich nacheinander angefahren werden können, stellt die zeitliche Verschachtelung von jeweils einem Messpunkt der aufwärts- beziehungsweise abwärtslaufenden Frequenzrampe eine besonders wirkungsvolle und effiziente Ausführungsform da. Dies ist insbesondere dadurch begründet, dass beide Frequenzrampen praktisch gleichzeitig aufgenommen werden. Die in den Figuren 3a und 3b dargestellten Verläufe des Ansteuersignals m(t) können insbesondere dazu beitragen unerwünschte Fading-Effekte zu vermeiden.

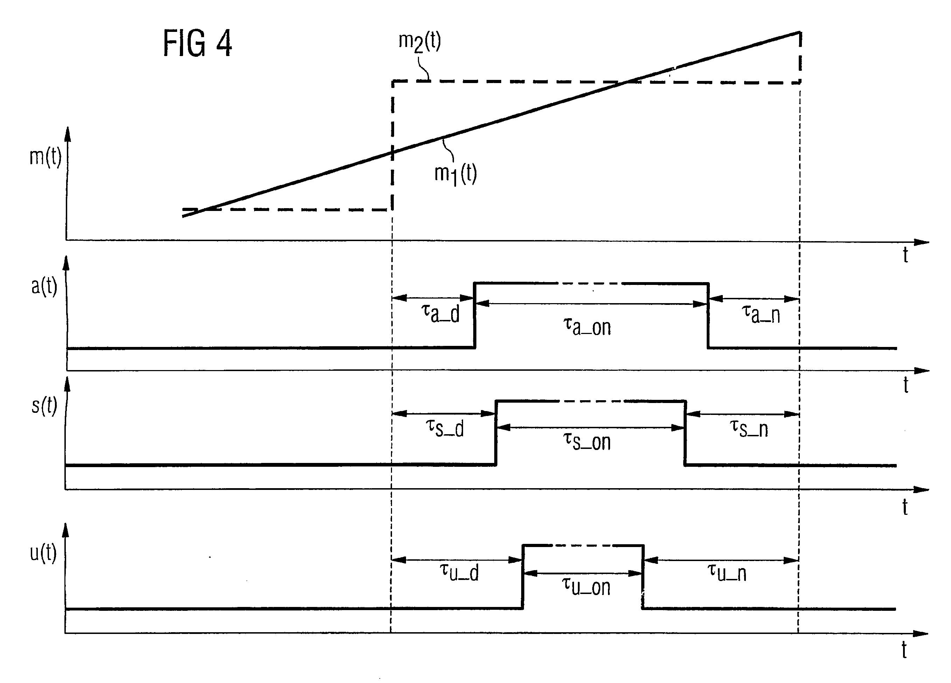

Figur 4 zeigt einen möglichen Zusammenhang des Ansteuersignals für den spannungsgesteuerten Oszillator m(t), des Leistungstaktes im Sendezweig a(t), des Samplesignals der Sampleand Holdschaltung 18 im Hochfrequenzzweig s(t) und des Triggersignals für den Analog-Digitalwandler u(t). Dabei bezeichnet die Kurve m₁(t) die kontinuierliche Frequenzrampe gemäß Figur 2a, während die Kurve m₂(t) die diskrete Frequenzrampe gemäß Figur 2b veranschaulicht. Die erfindungsgemäße Sendezeitbegrenzung des Sendesignals T(t) erfolgt über den Leistungstakt a(t), der dem in Figur 1 dargestellten Schalter 22 zugeführt wird. Bezogen auf die diskrete Frequenzrampe m₂(t) liegt die Frequenz für einen Zeitraum τ_{a_d} vor dem Sendepuls und für einen Zeitraum τ_{a_n} nach dem Sendepuls stabil an, wobei der Zeitraum τ_{a_on} der Sendepulslänge entspricht. Wie dies den Kurvenverläufen für das Samplesignal s(t) für den Hochfrequenzsamplekreis und dem Triggersignal u(t) für die Analog-Digitalwandlung zu entnehmen ist, weisen diese Signale gegenüber dem Leistungstakt a(t) eine zeitliche Verzögerung auf, um Überschneidungs- und Glitcheffekte zu reduzieren. Für die Darstellung gemäß Figur 4 gilt somit τ_{s_d} > τ_{a_d}, τ_{s_n} > τ_{a_n}, τ_{u_d} > τ_{s_d} und τ_{u_n} > τ_{s_n}. Entsprechend gilt τ_{a_on} > τ_{s_on} > τ_{u_on}. Dabei kann durch eine vorzugsweise parallele Verschiebung der Samplezeit τ_{s_on} und des Triggersignals für den Analog-Digitalwandler τ_{u_on}, gegebenenfalls auch über die Grenze der Sendepulslänge τ_{a_on} hinaus, zusätzlich Einfluss auf den jeweiligen Messbereich genommen werden.

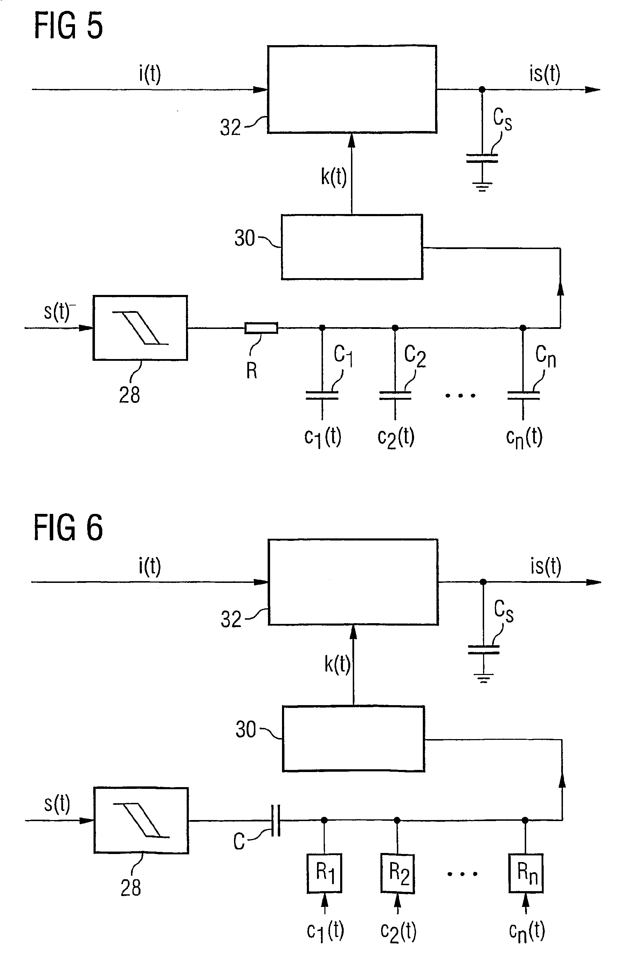

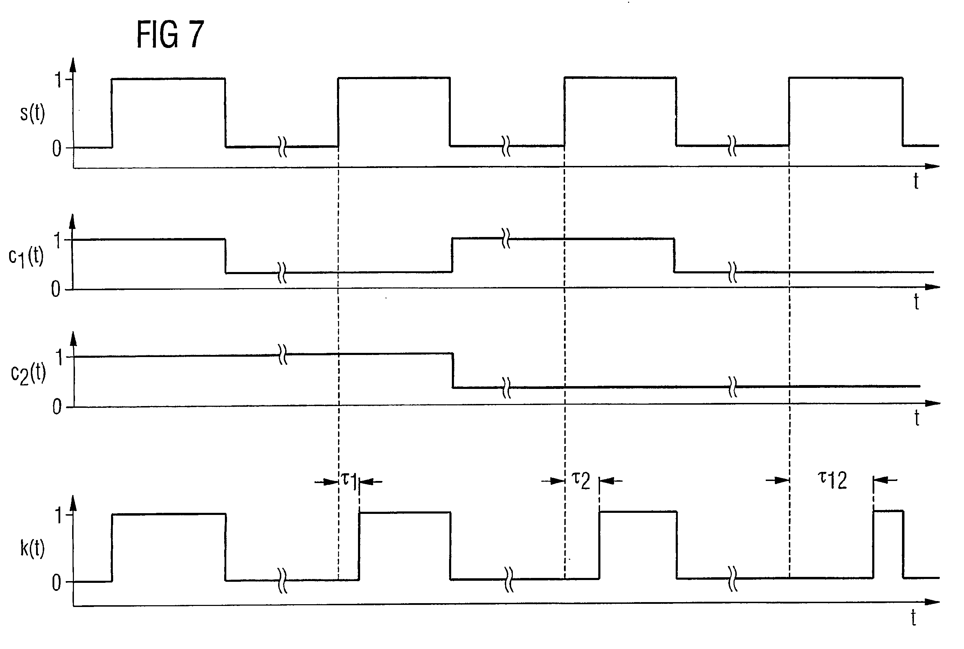

Figur 5 zeigt eine einfache Ausführungsform einer Ansteuerschaltung für die Sample- and Holdschaltung in Form einer RC-Variante. Dabei wird das Samplesignal s(t) einem Schmitt-Trigger 28 zugeführt, dessen Ausgang über einen Widerstand R mit dem Eingang eines Komparators 30 in Verbindung steht. Der Eingang des Komparators 30 ist weiterhin mit einer Mehrzahl von Kondensatoren C₁, C₂ bis Cₙ verbunden, denen jeweils ein entsprechendes Steuersignal c₁(t), c₂(t) bis cₙ(t) zugeführt werden kann, beispielsweise in der später anhand von Figur 7 näher erläuterten Weise. In Abhängigkeit von den Steuersignalen c₁(t), c₂(t) bis cₙ(t) liefert der Komparator 30 ein Ausgangssignal k(t) mit unterschiedlichen Pulsdauern. Das Ausgangssignal k(t) des Komparators 30 wird einem FET oder einem Diodenschalter 32 zugeführt, an dessen Eingang das Mischerausgangssignal i(t) anliegt. An dem über einen Kondensator Cₛ mit Masse verbundenen Ausgang des FET oder Diodenschalters 32 liegt somit das gesamplete Mischerausgangssignal iₛ(t) an.

Figur 6 zeigt eine einfache Ausführungsform einer Ansteuerschaltung für die Sample- and Holdschaltung in Form einer CR-Variante. Die Schaltung gemäß Figur 6 unterscheidet sich nur dadurch von der in Figur 5 gezeigten Schaltung, dass der Ausgang des Schmitt-Triggers 28 über einen Kondensator C mit dem Eingang des Komparators 30 verbunden ist, der weiterhin mit einer Mehrzahl von Widerständen R₁, R₂ bis Rₙ in Verbindung steht, denen die jeweiligen Steuersignale c₁(t), c₂(t) bis cₙ(t) zugeführt werden. Im Übrigen wird auf die Ausführungen zu Figur 5 verwiesen.

Figur 7 zeigt einen möglichen Zusammenhang von einer in Abhängigkeit von mehreren Steuersignalen erzeugten Pulsdauervariation. Dabei ist zu erkennen, dass sich in Abhängigkeit von den Steuersignalen c₁(t) und c₂(t) und in Abhängigkeit von der jeweiligen RC-Zeitkonstante τ₁, τ₂ oder τ₁₂ für das Ausgangssignal k(t) des Komparators 30 Pulse mit unterschiedlicher Länge ergeben. Dabei nimmt die Pulsdauer mit steigender Zeitkonstante ab. Es wird darauf hingewiesen, dass der Leistungstakt a(t) in gleicher oder ähnlicher Weise erzeugt werden kann, wie das Ausgangssignal des Komparators 30.

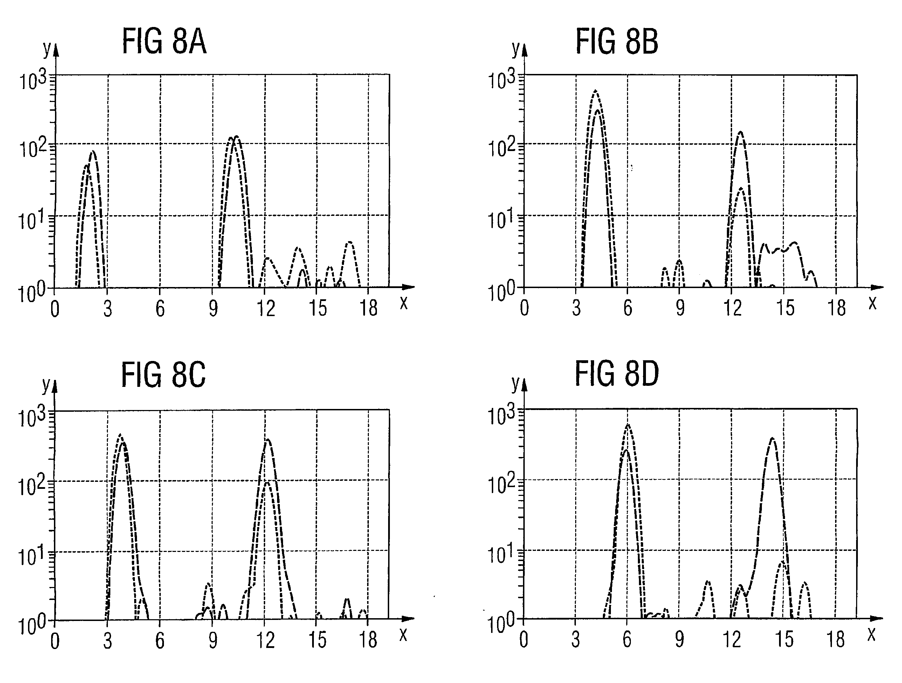

Figur 8a zeigt den Einfluss der Sampletorzeit auf die Signalamplitude für zwei Ziele mit zirka 8,4 m Abstand bei einer Entfernung des näher gelegenen Ziels von zirka 2 m, Figur 8b zeigt den Einfluss der Sampletorzeit auf die Signalamplitude für zwei Ziele mit zirka 8,4 m Abstand bei einer Entfernung des näher gelegenen Ziels von zirka 4,5 m, Figur 8c zeigt den Einfluss der Sampletorzeit auf die Signalamplitude für zwei Ziele mit zirka 8,4 m Abstand bei einer Entfernung des näher gelegenen Ziels von zirka 4 m und Figur 8d zeigt den Einfluss der Sampletorzeit auf die Signalamplitude für zwei Ziele mit zirka 8,4 m Abstand bei einer Entfernung des näher gelegenen Ziels von zirka 6 m. Dabei entspricht der gestrichelte Kurvenverlauf einer Sampletorzeit τ_{s_on} von 200 ns, während der punktierte Kurvenverlauf einer Sampletorzeit τ_{s_on} von 60 ns entspricht. Aufgezeigt wird der Einfluss der Sendepulslänge τ_{a_on} des Leistungstaktes a(t) auf den erzielbaren Messbereich für zwei verschiedene Pulslängen. Zu diesem Zweck wurden zwei Punktreflektoren (Corner-Reflektoren) im Abstand von ungefähr 8,4 m angeordnet und die Messung wurde für verschiedene Entfernungen durchführt. Einer Pulslänge von 60 ns entspricht ein effektiver Maximalmessbereich von zirka 10 m, das heißt Ziele, die weiter als 10 m entfernt sind werden in ihrer Empfangsamplitude stark gedämpft. Für eine Pulslänge von 200 ns, was einem effektiven Maximalmessbereich von zirka 33 m entspricht, tritt dagegen bis zu diesem Wert praktisch noch keine Dämpfung ein. In der Darstellung ist genau zu erkennen, dass bis zirka 10 m noch kein Unterschied in der Signalamplitude zwischen dem 60 ns und dem 20 ns Leistungstaktimpuls besteht. Ab zirka 12 m ist schon eine deutliche Abnahme der Signalamplitude im Vergleich mit 60 ns zu erkennen, die bei zirka 15 m in die Maximaldämpfung von zirka 25 dB zum 200 ns Leistungstaktimpuls übergeht. Um eine derartige Dämpfung des 200 ns Leistungstaktpulses mit einem nachgeschalteten Anti-Aliasing-Filter zu erreichen, ist beim Stand der Technik ein Filter von mindestens 6-ter Ordnung erforderlich, was hohen Schaltungsaufwand und teuere Bauteile erfordert. Erfindungsgemäß kann ein derartiges Anti-Aliasing-Filter vollständig entfallen.

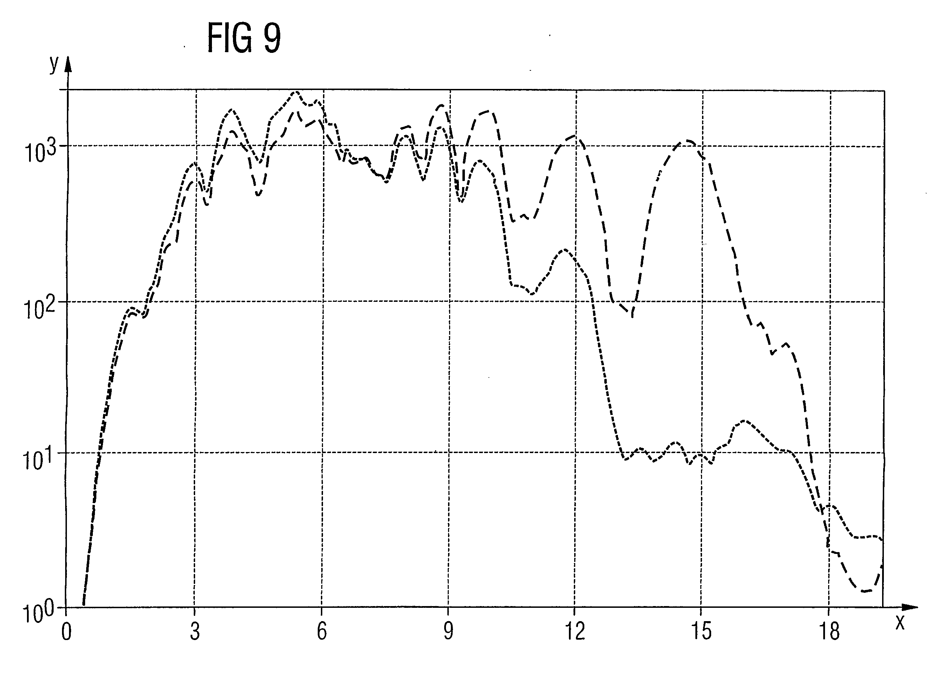

Figur 9 zeigt den Einfluss der Sampletorzeit auf die Signalamplitude für ein Ziel mit kontinuierlich variierter Entfernung. Dabei entspricht die gestrichelte Kurve einer Sampletorzeit τ_{s_on} von 200 ns, während die punktierte Kurve einer Sampletorzeit τ_{s_on} von 60 ns entspricht. Die Darstellung zeigt die Signalamplitudenabhängigkeit eines einzelnen Punktzieles kontinuierlich über der Entfernung aufgezeichnet, für zwei verschiedene Sendepulslängen τ_{a_on} von 60 ns und 200 ns. Auch in diesem Fall ist der Dämpfungseinsatz bei zirka 9 m, wobei eine Maximaldämpfung von zirka 20 dB und ungefähr 13 m zum 200 ns Leistungstaktpuls zu erkennen ist.

## Patentansprüche

1. Radarsystem mit einer Auswerteeinrichtung (10), die auf der Grundlage einer Spektralanalyse eines aus einem Sendesignal (T(t)) und einem Empfangssignal (R(t)) gebildeten Messsignals (h(t)) die Geschwindigkeit und/oder die Entfernung von zumindest einem zu ortenden Objekt bestimmt,
wobei Mittel (12) vorgesehen sind, die zur Vermeidung von Aliasing-Effekten die Sendezeit (τ_{a_on}) des Sendesignals (T(t)) begrenzen,
wobei,
durch die Begrenzung der Sendezeit (τ_{a_on}) des Sendesignals (T(t)) ein pulsförmiges Sendesignal (T(t)) erzeugt wird, dessen Sendepulslänge (τ_{a_on}) den maximalen Messbereich festlegt,
**dadurch gekennzeichnet,**
**dass** zur Bestimmung des maximalen Messbereiches zwischen zumindest zwei Sendepulslängen (τ_{a_on}) gewechselt wird und der Einfluss auf die Empfangssignalstärke ausgewertet wird.

2. Radarsystem nach Anspruch 1,
**dadurch gekennzeichnet,**
**dass** die Sendepulslänge (τ_{a_on}) des Sendesignals (T(t)) variabel ist.

3. Radarsystem nach einem der vorhergehenden Ansprüche,
**dadurch gekennzeichnet,**
**dass** das Messsignal ein digitales Messsignal (h(t)) ist.

4. Radarsystem nach Anspruch 3,
**dadurch gekennzeichnet,**
**dass** das digitale Messsignal (h(t)) aus einem Mischerausgangssignal (i(t)) eines Mischers (20) gewonnen wird.

5. Radarsystem nach Anspruch 4,
**dadurch gekennzeichnet,**
**dass** das digitale Messsignal (h(t)) von einem Analog-Digitalwandler (14) geliefert wird, dessen Abtastfrequenz variabel ist.

6. Radarsystem nach Anspruch 5,
**dadurch gekennzeichnet,**
**dass** das Mischerausgangssignal (i(t)) von einer Sample- and Holdschaltung (18) zwischengespeichert wird, bevor es dem Analog-Digitalwandler (14) zugeführt wird.

7. Radarsystem nach Anspruch 6,
**dadurch gekennzeichnet,**
**dass** die Samplezeit (τ_{s_on}) der Sample- and Holdschaltung (18) unabhängig von der Sendepulslänge (τ_{a_on}) einstellbar ist.

8. Radarsystem nach Anspruch 6 oder 7,
**dadurch gekennzeichnet,**
**dass** die Samplezeit (τ_{s_on}) der Sample- and Holdschaltung (18) zur Sendepulslänge (τ_{a_on}) verzögert ist.

9. Radarsystem nach einem der Ansprüche 6 bis 8,
**dadurch gekennzeichnet,**
**dass** die Samplezeit (τ_{s_on}) der Sample- and Holdschaltung (18) kürzer oder gleich der Sendepulslänge (τ_{a_on}) ist.

10. Radarsystem nach einem der Ansprüche 6 bis 9,
**dadurch gekennzeichnet,**
**dass** der Eingang der Sample- and Holdschaltung (18) außerhalb der Samplezeit (τ_{s_on}) auf einen niederohmigen Arbeitspunkt gezogen wird.

11. Radarsystem nach einem der vorhergehenden Ansprüche,
**dadurch gekennzeichnet,**
**dass** das Sendesignal ein frequenzmoduliertes Sendesignal (T(t)) ist.

12. Radarsystem nach Anspruch 11,
**dadurch gekennzeichnet,**
**dass** die Frequenz des frequenzmodulierten Sendesignals (T(t)) zumindest zeitweise variiert wird, insbesondere zur Bestimmung der Entfernung von einem zu ortenden Objekt.

13. Radarsystem nach Anspruch 11 oder 12
**dadurch gekennzeichnet,**
**dass** die Frequenz des frequenzmodulierten Sendesignals (T(t)) kontinuierlich variiert wird.

14. Radarsystem nach Anspruch 11 oder 12,
**dadurch gekennzeichnet,**
**dass** die Frequenz des frequenzmodulierten Sendesignals (T(t)) in diskreten Frequenzstufen variiert wird.

15. Radarsystem nach Anspruch 14,
**dadurch gekennzeichnet,**
**dass** die diskreten Frequenzstufen in beliebiger Reihenfolge anfahrbar sind.

16. Radarsystem nach Anspruch 11,
**dadurch gekennzeichnet,**
**dass** die Frequenz des frequenzmodulierten Sendesignals (T(t)) zumindest zeitweise konstant gehalten wird, insbesondere zur Bestimmung der Geschwindigkeit eines zu ortenden Objektes.

17. Radarsystem nach einem der vorhergehenden Ansprüche,
**dadurch gekennzeichnet,**
**dass** die einstellbare Sendezeit (τ_{a_on}) an im Kraftfahrzeugbereich erforderliche Messbereiche angepasst ist und insbesondere zwischen 20 ns und 200 ns liegt.

## Claims

1. Radar system having an evaluation device (10) which, on the basis of a spectral analysis of a measuring signal (h(t)) formed from a transmit signal (T(t)) and a receive signal (R(t)), determines the speed and/or distance of at least one object that is to be located,
wherein means (12) are provided which limit the transmission time (τ_{a_on}) of the transmit signal (T (t)) in order to avoid aliasing effects,
wherein as a result of limiting the transmission time (τ_{a_on}) of the transmit signal (T(t)) a pulse-shaped transmit signal (T(t)) is generated whose transmission pulse length (τ_{a_on}) determines the maximum measuring range,
**characterised in that**
in order to determine the maximum measuring range, toggling takes place between at least two transmission pulse lengths (τ_{a_on}) and the effect on the strength of the receive signal is evaluated.

2. Radar system according to claim 1,
**characterised in that**
the transmission pulse length (τ_{a_on}) of the transmit signal (T(t)) is variable.

3. Radar system according to one of the preceding claims,
**characterised in that**
the measuring signal is a digital measuring signal (h(t)).

4. Radar system according to claim 3,
**characterised in that**
the digital measuring signal (h(t)) is obtained from a mixer output signal (i(t)) of a mixer (20).

5. Radar system according to claim 4,
**characterised in that**
the digital measuring signal (h(t)) is supplied by an analogue-digital converter (14) having a variable sampling frequency.

6. Radar system according to claim 5,
**characterised in that**
the mixer output signal (i(t)) is buffered by a sample and hold circuit (18) before being supplied to the analogue-digital converter (14).

7. Radar system according to claim 6,
**characterised in that**
the sample time (τ_{s_on}) of the sample and hold circuit (18) can be set independently of the transmission pulse length (τ_{a_on}).

8. Radar system according to claim 6 or 7,
**characterised in that**
the sample time (τ_{s_on}) of the sample and hold circuit (18) is delayed with respect to the transmission pulse length (τ_{a_on}).

9. Radar system according to one of claims 6 to 8,
**characterised in that**
the sample time (τ_{s_on}) of the sample and hold circuit (18) is less than or equal to the transmission pulse length (τ_{a_on}).

10. Radar system according to one of claims 6 to 9,
**characterised in that**
the input of the sample and hold circuit (18) is taken outside of the sample time (τ_{s_on}) to a low-resistance operating point.

11. Radar system according to one of the preceding claims,
**characterised in that**
the transmit signal is a frequency-modulated transmit signal (T(t)).

12. Radar system according to claim 11,
**characterised in that**
the frequency of the frequency-modulated transmit signal (T(t)) is varied at least periodically, in particular for the purpose of determining the distance of an object that is to be located.

13. Radar system according to claim 11 or 12,
**characterised in that**
the frequency of the frequency-modulated transmit signal (T(t)) is varied continuously.

14. Radar system according to claim 11 or 12,
**characterised in that**
the frequency of the frequency-modulated transmit signal (T(t)) is varied in discrete frequency steps.

15. Radar system according to claim 14,
**characterised in that**
the discrete frequency steps can be started in any sequence.

16. Radar system according to claim 11,
**characterised in that**
the frequency of the frequency-modulated transmit signal (T(t)) is kept constant at least periodically, in particular for the purpose of determining the speed of an object that is to be located.

17. Radar system according to one of the preceding claims,
**characterised in that**
the settable transmission time (τ_{a_on}) is adapted to measuring ranges required in the motor vehicle field and ranges in particular between 20 ns and 200 ns.

## Revendications

1. Système de radar avec un dispositif d'analyse (10) lequel détermine, sur la base d'une analyse spectrale d'un signal de mesure (h(t)) formé par un signal d'émission (T(t)) et un signal de réception (R(t)), la vitesse et/ou la distance d'au moins un objet à repérer,
des moyens (12) étant prévus, lesquels limitent le créneau (τ_{a_on}) du signal d'émission (T(t)) pour éviter des effets de distorsion de repliement,
moyennant quoi, grâce à la limitation du créneau (τ_{a_on}) du signal d'émission (T(t)), un signal d'émission en forme d'impulsion (T(t)) est généré, dont la longueur d'impulsion d'émission (τ_{a_on}) détermine la plage de mesure maximale,
**caractérisé en ce qu'**une alternance est réalisée entre au moins deux longueurs d'impulsion d'émission (τ_{a_on}) pour la détermination de la plage de mesure maximale,
et l'influence sur la force du signal de réception est analysée.

2. Système de radar selon la revendication 1, **caractérisé en ce que** la longueur d'impulsion d'émission (τ_{a_on}) du signal d'émission (T(t)) est variable.

3. Système de radar selon l'une quelconque des revendications précédentes, **caractérisé en ce que** le signal de mesure est un signal de mesure numérique (h(t)).

4. Système de radar selon la revendication 3, **caractérisé en ce que** le signal de mesure numérique (h(t)) est obtenu à partir d'un signal de sortie de mélangeur (i(t)) d'un mélangeur (20).

5. Système de radar selon la revendication 4, **caractérisé en ce que** le signal de mesure numérique (h(t)) est délivré par un convertisseur analogique-numérique (14), dont la fréquence de balayage est variable.

6. Système de radar selon la revendication 5, **caractérisé en ce que** le signal de sortie du mélangeur (i(t)) est temporairement mis en mémoire par un circuit d'échantillonnage et d'arrêt (18) avant d'être délivré au convertisseur analogique-numérique (14).

7. Système de radar selon la revendication 6, **caractérisé en ce que** le temps d'échantillonnage (τ_{s_on}) du circuit d'échantillonnage et d'arrêt (18) est réglé indépendamment de la longueur d'impulsion d'émission (τ_{a_on}).

8. Système de radar selon la revendication 6 ou 7, **caractérisé en ce que** le temps d'échantillonnage (τ_{s_on}) du circuit d'échantillonnage et d'arrêt (18) est temporisé par rapport à la longueur d'impulsion d'émission (τ_{a_on}).

9. Système de radar selon l'une des revendications 6 à 8, **caractérisé en ce que** le temps d'échantillonnage (τ_{s_on}) du circuit d'échantillonnage et d'arrêt (18) est plus court ou égal à la longueur d'impulsion d'émission (τ_{a_on}).

10. Système de radar selon l'une des revendications 6 à 9, **caractérisé en ce que** l'entrée du circuit d'échantillonnage et d'arrêt (18), en-dehors du temps d'échantillonnage (τ_{s_on}), est tirée vers un point de fonctionnement dynamique de basse impédance.

11. Système de radar selon l'une des revendications précédentes, **caractérisé en ce que** le signal d'émission est un signal d'émission à modulation de fréquence (T(t)).

12. Système de radar selon la revendication 11, **caractérisé en ce que** l'on fait varier la fréquence du signal d'émission à modulation de fréquence (T(t)) au moins par intermittence, en particulier pour la détermination de la distance d'un objet à repérer.

13. Système de radar selon la revendication 11 ou 12, **caractérisé en ce que** la fréquence du signal d'émission à modulation de fréquence (T(t)) varie en continu.

14. Système de radar selon la revendication 11 ou 12, **caractérisé en ce que** la fréquence du signal d'émission à modulation de fréquence (T(t)) varie selon des étages de fréquence discrets.

15. Système de radar selon la revendication 14, **caractérisé en ce que** les étages de fréquence discrets sont amorcés selon un ordre au choix.

16. Système de radar selon la revendication 11, **caractérisé en ce que** la fréquence du signal d'émission à modulation de fréquence (T(t)) est maintenue constante au moins par intermittence, en particulier pour la détermination de la vitesse d'un objet à repérer.

17. Système de radar selon l'une quelconque des revendications précédentes, **caractérisé en ce que** le créneau réglable (τ_{a_on}) est adapté à des plages de mesure nécessaires dans la zone du véhicule automobile, et est en particulier compris entre en 20 ns et 200 ns.
